# DEMANDE DE BREVET EUROPEEN

(11) **EP 3 643 909 A1**
(43) Date de publication de la demande: **29.04.2020**
(21) Numéro de dépôt: 19204111.9
(22) Date de dépôt: 18.10.2019
(51) Int. Cl.: F02K 1/72

(54) **TURBORÉACTEUR COMPORTANT UNE NACELLE ÉQUIPÉE D'UN SYSTÈME D'INVERSION DE POUSSÉE MOBILE EN TRANSLATION ET D'UN CARTER DE SOUFFLANTE ÉQUIPÉ DE SUPPORTS**

(30) Priorité: 22.10.2018 FR 1871256
(71) Demandeur: AIRBUS OPERATIONS, 31060 Toulouse Cedex 9 (FR)
(72) Inventeur: GARDES, Pascal, 31530 LEVIGNAC (FR); RIDRAY, Frédéric, 32600 L'ISLE JOURDAIN (FR); GONCALVES, José, 31770 COLOMIERS (FR)
(74) Mandataire: Cabinet Le Guen Maillet

(57) **Abrégé**

L'invention concerne un turboréacteur (100) avec une nacelle (102) comportant un carter de soufflante (106) et un système d'inversion de poussée (207). Le carter de soufflante (106) comporte une paroi extérieure (206b), et le système d'inversion (207) comporte un coulisseau (207b) présentant un cadre amont (250), un cadre aval (252) et une pluralité de poutres (254) fixées entre le cadre amont (250) et le cadre aval (252), où le coulisseau (207b) est mobile entre une position avancée et une position reculée. Le carter de soufflante (106) comporte au niveau d'un bord arrière (260) de sa paroi extérieure (206b), un support (402). Chaque support (402) comporte, pour chaque poutre (254), un sabot (404) fixé à paroi extérieure (206b) et positionné radialement autour de la poutre (254), et une jupe (406) solidaire des sabots (404) et prolongeant le bord arrière (260), où en position avancée, la jupe (406) est en appui autour du cadre aval (252), et où en position avancée / reculée / intermédiaire, les sabots (404) sont à distance des poutres (254) / du cadre amont (250).

## Description

### DOMAINE TECHNIQUE

La présente invention concerne un turboréacteur double flux qui comporte une nacelle équipée d'un système d'inversion de poussée qui est mobile en translation et d'un carter de soufflante qui comporte des supports s'appuyant sur le système d'inversion de poussée, ainsi qu'un aéronef comportant au moins un tel turboréacteur double flux.

### ETAT DE LA TECHNIQUE ANTERIEURE

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur.

La nacelle comporte une structure fixe sur laquelle sont fixés, de l'avant vers l'arrière, un capot délimitant une entrée d'air, un carter de soufflante et un système d'inversion de poussée.

Le système d'inversion de poussée comporte un coulisseau mobile en translation sur la structure fixe et un capot mobile fixé au et en aval du coulisseau.

Le coulisseau se recule pour écarter le capot mobile du carter de soufflante afin de laisser libre un passage entre une veine dans laquelle circule un flux secondaire et l'extérieur. A cette fin, le coulisseau est ajouré et porte des volets inverseurs où chacun est mobile entre une position stockée dans laquelle il n'interagit pas avec le flux secondaire, et une position déployée dans laquelle il se positionne en travers du flux secondaire pour le dévier vers l'extérieur lorsque la partie mobile est reculée.

Dans une telle nacelle de l'état de la technique, le bord arrière du carter de soufflante est fixé sur la structure fixe qui la maintient en position, que le coulisseau soit avancé ou reculé.

Pour des gains de poids, il est souhaitable de réduire les dimensions de la structure fixe, en particulier au niveau du bord arrière du carter de soufflante tout en garantissant le maintien dudit bord arrière.

Les documents EP-A-0 315 524, US-A-2018/274484 et EP-A-1 878 904 divulguent des turboréacteurs double flux de l'état de la technique.

### EXPOSE DE L'INVENTION

Un objet de la présente invention est de proposer un turboréacteur double flux qui comporte une nacelle équipée d'un système d'inversion de poussée qui est mobile en translation et d'un carter de soufflante qui comporte des supports s'appuyant sur le système d'inversion de poussée.

A cet effet, est proposé un turboréacteur double flux avec un axe longitudinal et comportant un moteur et une nacelle entourant le moteur,
ladite nacelle comportant une structure fixe, un carter de soufflante et un système d'inversion de poussée,
où le carter de soufflante comporte, fixées sur la structure fixe, une paroi intérieure qui délimite avec le moteur, une veine d'un flux secondaire, et une paroi extérieure,
où le système d'inversion de poussée comporte :
- un coulisseau monté mobile en translation sur la structure fixe, et présentant un cadre amont, un cadre aval et une pluralité de poutres parallèles à l'axe longitudinal, où chacune est fixée par une première extrémité au cadre amont et par une deuxième extrémité au cadre aval, et
- un capot mobile fixé au et en aval du cadre aval et présentant une paroi intérieure qui délimite avec le moteur, la veine, et une paroi extérieure,
où le coulisseau est mobile entre une position avancée dans laquelle le coulisseau est logé entre la paroi extérieure du carter de soufflante et la paroi intérieure du carter de soufflante et est positionné de manière à ce que le capot mobile soit rapproché du carter de soufflante et une position reculée dans laquelle le coulisseau principal est positionné de manière à ce que le capot mobile soit éloigné du carter de soufflante pour définir entre eux des fenêtres ouvertes entre la veine et l'extérieur de la nacelle,
où le carter de soufflante comporte au niveau d'un bord arrière de sa paroi extérieure, un support qui comporte, d'une part, pour chaque poutre, un sabot fixé à l'intérieur de la paroi extérieure en regard de la poutre et positionné radialement autour de la poutre, et, d'autre part, une jupe solidaire des sabots et prolongeant le bord arrière de la paroi extérieure du carter de soufflante, et
où en position avancée, la jupe est en appui autour du cadre aval, et les sabots sont à distance des poutres, où en position reculée, les sabots sont en regard et à distance du cadre amont, et où en position intermédiaire entre la position avancée et la position reculée, les sabots sont en regard et à distance des poutres.

Un tel turboréacteur permet ainsi de réduire les dimensions de la structure fixe tout en garantissant le maintien du bord arrière du carter de soufflante quelle que soit la position du système d'inversion de poussée.

Avantageusement, la distance 'dl' entre chaque sabot et la poutre correspondante est comprise entre 3 mm et 5 mm, et la distance 'd2' entre chaque sabot et le cadre amont est comprise entre 0 et 3 mm.

Avantageusement, le cadre aval porte un joint sur son pourtour extérieur, et la jupe vient contre le joint en position avancée.

L'invention propose également un aéronef comportant au moins un turboréacteur double flux selon l'une des variantes précédentes.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef comportant un turboréacteur selon l'invention,
[Fig. 2] est une vue en perspective d'une coupe du turboréacteur selon l'invention en position avancée,
[Fig. 3] est une vue en perspective d'une coupe du turboréacteur de la Fig. 2 en position reculée,
[Fig. 4] est une vue de côté et en coupe d'une nacelle selon l'invention en position avancée,
[Fig. 5] correspond à la Fig. 4 pour une position intermédiaire, et
[Fig. 6] correspond à la Fig. 4 pour une position reculée.

### EXPOSE DETAILLE DE MODES DE REALISATION

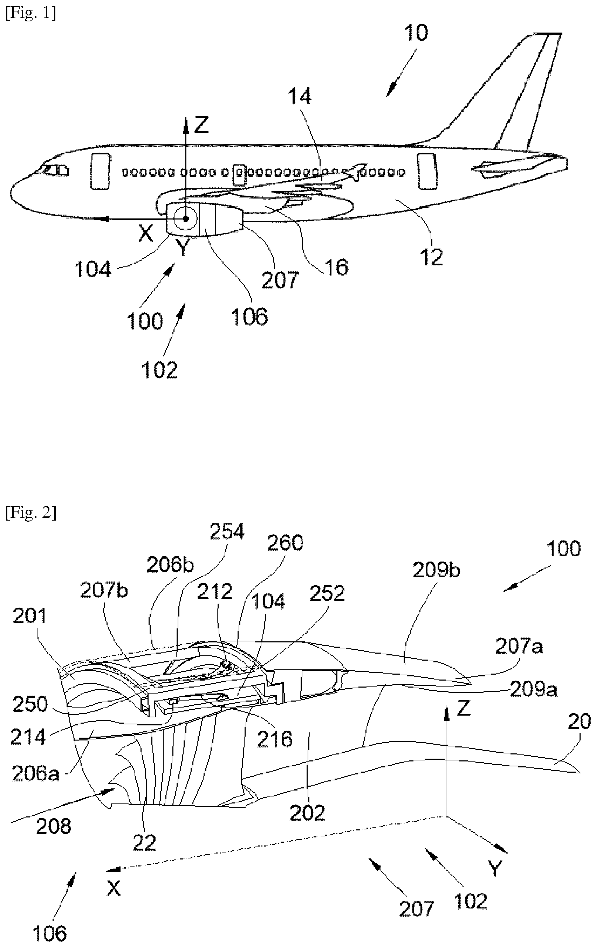

Dans la description qui suit, les termes relatifs à une position sont pris en référence à un aéronef en position d'avancement comme il est représenté sur la Fig. 1.

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

Le turboréacteur double flux 100 présente une nacelle 102 et un moteur (20, Fig. 2) qui est logé à l'intérieur de la nacelle 102.

Dans la description qui suit, et par convention, on appelle X l'axe longitudinal du turboréacteur double flux 100 qui est parallèle à l'axe longitudinal de l'aéronef 10 orienté positivement dans le sens d'avancement de l'aéronef 10, on appelle Y l'axe transversal de l'aéronef qui est horizontal lorsque l'aéronef est au sol, et Z l'axe vertical lorsque l'aéronef est au sol, ces trois directions X, Y et Z étant orthogonales entre elles.

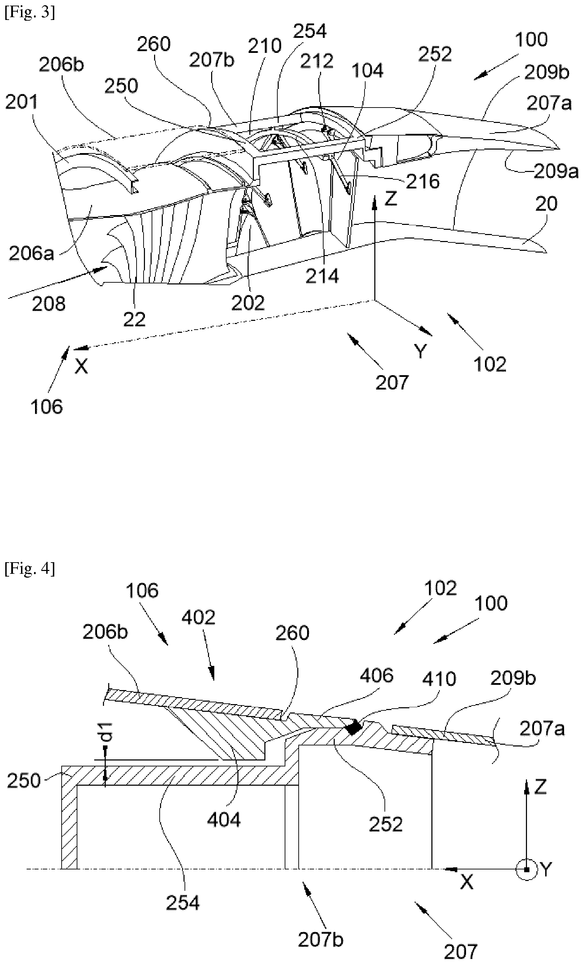

La Fig. 2 et la Fig. 3 montrent des coupes du turboréacteur double flux 100. La nacelle 102 comporte une structure fixe 201 qui prend ici la forme d'un cadre avant.

Le moteur 20 est matérialisé ici par son cône avant et sa soufflante 22 à l'intérieur de l'entrée d'air de la nacelle 102. Comme le montrent les Figs. 2 et 3, le turboréacteur double flux 100 présente entre la nacelle 102 et le moteur 20, une veine 202 dans laquelle circule le flux secondaire 208 provenant de l'entrée d'air à travers la soufflante 22.

La nacelle 102 comporte, fixés sur la structure fixe 201, de l'avant vers l'arrière, un capot 104 délimitant l'entrée d'air, un carter de soufflante 106 et un système d'inversion de poussée 207.

Le carter de soufflante 106 comporte, fixées sur la structure fixe 201, une paroi intérieure 206a autour du moteur 20 et qui délimite la surface extérieure de la veine 202 et une paroi extérieure 206b qui constitue le carénage extérieur de la nacelle 102. Sur les Figs. 2 et 3, la paroi extérieure 206b est vue en transparence (traits mixtes fins).

Le système d'inversion de poussée 207 comporte un coulisseau 207b qui est monté mobile en translation sur la structure fixe 201, et un capot mobile 207a formant les parois de la tuyère et fixé au et en aval du coulisseau 207b.

Le capot mobile 207b présente une paroi intérieure 209a autour du moteur 20 et qui délimite la surface extérieure de la veine 202 et une paroi extérieure 209b qui constitue le carénage extérieur de la nacelle 102.

Le coulisseau 207b est ainsi mobile en translation selon une direction de translation globalement parallèle à l'axe longitudinal X entre une position avancée (Fig. 2) et une position reculée (Fig. 3) et inversement. En position avancée, le coulisseau 207b est positionné le plus en avant possible de manière à ce que le capot mobile 207a soit rapproché du carter de soufflante 106. En position reculée, le coulisseau 207b est positionné le plus en arrière possible de manière à ce que le capot mobile 207a soit éloigné du carter de soufflante 106 pour ouvrir des fenêtres 210 entre la veine 202 et l'extérieur de la nacelle 102.

En position avancée, la paroi intérieure 209a du capot mobile 207a et la paroi intérieure 206a du carter de soufflante 106 se prolongent de manière à définir la surface extérieure de la veine 202. De la même manière, en position avancée, la paroi extérieure 209b du capot mobile 207a et la paroi extérieure 206b du carter de soufflante 106 se prolongent de manière à définir le carénage extérieur de la nacelle 102.

C'est-à-dire que le bord avant de la paroi extérieure 209b du capot mobile 207a qui est orienté vers l'avant de la nacelle 102 vient au plus près du bord arrière 260 de la paroi extérieure 206b du carter de soufflante 106 qui est orienté vers l'arrière de la nacelle 102.

En position reculée, le capot mobile 207a et le carter de soufflante 106 sont à distance et définissent entre eux les fenêtres 210 ouvertes entre la veine 202 et l'extérieur de la nacelle 102. C'est-à-dire que l'air provenant du flux secondaire 208 traverse les fenêtres 210 pour rejoindre l'extérieur du turboréacteur double flux 100.

En position avancée, le coulisseau 207b loge entre la paroi extérieure 206b du carter de soufflante 106 et la paroi intérieure 206a du carter de soufflante 106.

Comme cela est montré sur la Fig. 4, la paroi extérieure 209b du capot mobile 207a et la paroi extérieure 206b du carter de soufflante 106 ne se prolongent pas directement en position avancée du fait de la présence d'un support 402 qui vient en appui autour du cadre aval 252 et qui s'intercalent entre le bord avant de la paroi extérieure 209b du capot mobile 207a et le bord arrière 260 de la paroi extérieure 206b du carter de soufflante 106.

Pour dévier le flux secondaire 208 de la veine 202 vers l'extérieur, le coulisseau 207b porte des moyens de déviation 104 qui comportent ici des portes 104 mais qui pourraient comporter également ou en remplacement des cascades.

Le coulisseau 207b prend la forme d'un cylindre à parois ajourées et présente un cadre amont 250 orienté vers l'avant et un cadre aval 252 orienté vers l'arrière. Le cadre amont 250 et le cadre aval 252 prennent globalement la forme d'une couronne autour de la veine 202. Le capot mobile 207a est fixé au et en aval du cadre aval 252.

Le coulisseau 207b comporte également une pluralité de poutres 254 parallèles à l'axe longitudinal X, où chacune est fixée par une première extrémité au cadre amont 250 et par une deuxième extrémité au cadre aval 252. Il y a une pluralité de poutres 254 réparties sur le pourtour de la nacelle 102 afin d'assurer la rigidité du coulisseau 207b.

Chaque fenêtre 210 est délimitée entre deux poutres 254 successives et entre le cadre amont 250 et le cadre aval 252.

La translation du coulisseau 207b est réalisée par tous systèmes de glissières appropriés entre la structure fixe 201 et le coulisseau 207b. Le déplacement du coulisseau 207b est assuré par tous moyens de déplacements appropriés comme par exemple des vérins.

Dans le mode de réalisation de l'invention présenté aux Figs. 2 et 3, la nacelle 102 comporte une pluralité de portes 104 réparties sur la périphérie de la nacelle 102 et chacune est montée articulée sur le coulisseau 207b entre une position fermée (Fig. 2) et une position ouverte (Fig. 3) et inversement.

La position fermée peut être adoptée lorsque le coulisseau 207b est en position avancée ou en position reculée. La position ouverte ne peut être adoptée que lorsque le coulisseau 207b est en position reculée.

En position fermée, chaque porte 104 obture une fenêtre 210 et en position ouverte, la porte 104 n'obture pas la fenêtre 210 permettant le passage du flux secondaire 208.

Ainsi, en position fermée, chaque porte 104 est globalement dans le prolongement du capot mobile 207a et en position ouverte, chaque porte 104 se positionne en travers de la veine 202 et dévie au moins une partie du flux secondaire 208 vers l'extérieur à travers la fenêtre 210.

En position avancée, chaque porte 104 se positionne également entre la paroi extérieure 206b du carter de soufflante 106 et la paroi intérieure 206a du carter de soufflante 106.

Chaque porte 104 est ici articulée au cadre aval 252 sur des charnières 212 tandis que le bord libre opposé se positionne vers l'amont en position fermée et vers le moteur 20 en position ouverte.

Dans le mode de réalisation de l'invention présenté ici, l'ensemble mobile 207 présente également un coulisseau secondaire 214 qui est monté mobile en translation selon une direction parallèle à la direction de translation sur le coulisseau 207b. Le coulisseau secondaire 214 est ainsi mobile entre une première position et une deuxième position.

L'ensemble mobile 207 présente également un système de transmission 216 qui, pour chaque porte 104, prend ici la forme d'une tringle articulée par une extrémité à la porte 104 et articulée par une autre extrémité au coulisseau secondaire 214.

Le système de transmission 216 est prévu pour faire passer chaque porte 104 de la position fermée à la position ouverte lorsque le coulisseau secondaire 214 passe de la première position à la deuxième position et inversement.

Dans le mode de réalisation de l'invention présenté ici, la première position consiste à déplacer le coulisseau secondaire 214 vers l'avant tandis que la deuxième position consiste à déplacer le coulisseau secondaire 214 vers l'arrière.

La translation du coulisseau secondaire 214 est réalisée par tous systèmes de glissières appropriés entre le coulisseau 207b et le coulisseau secondaire 214. Le déplacement du coulisseau secondaire 214 est assuré par tous moyens de déplacements appropriés comme par exemple des vérins.

Comme précisé ci-dessus, les portes 104 peuvent être remplacées ou venir en complément de cascades. De la même manière, le mode de réalisation des portes 104 peut être différent.

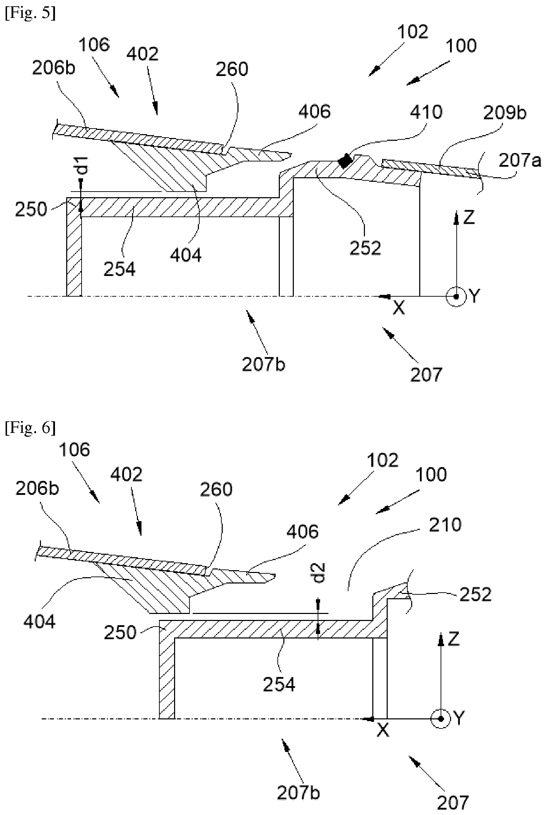

Les Figs. 4 à 6 montrent le carter de soufflante 106 et le coulisseau 207b en position avancée (Fig. 4), en position reculée (Fig. 6) et en position intermédiaire (Fig. 5) entre la position avancée et la position reculée.

Le carter de soufflante 106 comporte au niveau du bord arrière 260 de sa paroi extérieure 206b, un support 402.

Pour chaque poutre 254, le support 402 comporte un sabot 404 fixé à l'intérieur de la paroi extérieure 206b en regard de la poutre 254 et positionné radialement autour de la poutre 254.

Le support 402 comporte également une jupe 406 qui prend la forme d'un arc de cylindre qui prolonge le bord arrière 260 de la paroi extérieure 206b du carter de soufflante 106. La jupe 406 s'étend au-delà du bord arrière 260 de la paroi extérieure 206b du carter de soufflante 106 et autour du cadre aval 252 en position avancée.

La jupe 406 est solidaire des sabots 404.

En position avancée, la jupe 406 vient en appui autour du cadre aval 252 pour assurer la continuité aérodynamique de la nacelle 102 et prolonge la paroi extérieure 209b du capot mobile 207a.

En position avancée, les sabots 404 sont à distance des poutres 254.

En position reculée, les sabots 404 sont en regard et à distance du cadre amont 250 et la jupe 406 n'est plus supportée par le cadre aval 252.

De la même manière, en position intermédiaire, les sabots 404 sont en regard et à distance des poutres 254 et la jupe 406 n'est plus supportée par le cadre aval 252.

Les distances entre les sabots 404 et les poutres 254, d'une part, et, entre les sabots et le cadre amont 250, d'autre part, sont telles que si le carter de soufflante 106 se déforme, au moins un des sabots 404 vient en appui contre une poutre 254 ou le cadre amont 250, de manière à limiter la déformation du carter de soufflante 106. En d'autres termes, les distances sont définies par les efforts maximums que peuvent supporter les poutres 254 durant la phase de déploiement en fonction de la déformée maximale de la paroi extérieure 206b et de la capacité maximale du capot mobile à encaisser la déformation.

Ainsi, avec une telle installation, la structure fixe 201 est réduite mais les déformations au niveau du bord arrière de la paroi extérieure 206b du carter de soufflante 106 restent limitées.

Préférentiellement, la distance 'dl' entre chaque sabot 404 et la poutre 254 correspondante est comprise entre 3 mm et 5 mm. De la même manière, la distance 'd2' entre chaque sabot 404 et le cadre amont 250 est comprise entre 0 et 3 mm.

Pour assurer une meilleure étanchéité en position avancée, le cadre aval 252 porte un joint 410, ici un joint torique, sur son pourtour extérieur, et la jupe 406 vient contre le joint 410 en position avancée.

L'invention a été plus particulièrement décrite dans le cas d'une nacelle sous une aile mais elle peut s'appliquer à une nacelle située à l'arrière du fuselage.

## Revendications

1. Turboréacteur double flux (100) avec un axe longitudinal (X) et comportant un moteur (20) et une nacelle (102) entourant le moteur (20),
ladite nacelle (102) comportant une structure fixe (201), un carter de soufflante (106) et un système d'inversion de poussée (207),
où le carter de soufflante (106) comporte, fixées sur la structure fixe (201), une paroi intérieure (206a) qui délimite avec le moteur (20), une veine (202) d'un flux secondaire (208), et une paroi extérieure (206b),
où le système d'inversion de poussée (207) comporte :
- un coulisseau (207b) monté mobile en translation sur la structure fixe (201), et présentant un cadre amont (250), un cadre aval (252) et une pluralité de poutres (254) parallèles à l'axe longitudinal X, où chacune est fixée par une première extrémité au cadre amont (250) et par une deuxième extrémité au cadre aval (252), et
- un capot mobile (207a) fixé au et en aval du cadre aval (252) et présentant une paroi intérieure (209a) qui délimite avec le moteur (20), la veine (202), et une paroi extérieure (209b),
où le coulisseau (207b) est mobile entre une position avancée dans laquelle le coulisseau (207b) est logé entre la paroi extérieure (206b) du carter de soufflante (106) et la paroi intérieure (206a) du carter de soufflante (106) et est positionné de manière à ce que le capot mobile (207a) soit rapproché du carter de soufflante (106) et une position reculée dans laquelle le coulisseau principal (207b) est positionné de manière à ce que le capot mobile (207a) soit éloigné du carter de soufflante (106) pour définir entre eux des fenêtres (210) ouvertes entre la veine (202) et l'extérieur de la nacelle (102),
où le carter de soufflante (106) comporte au niveau d'un bord arrière (260) de sa paroi extérieure (206b), un support (402) comportant, d'une part, pour chaque poutre (254), un sabot (404) fixé à l'intérieur de la paroi extérieure (206b) en regard de la poutre (254) et positionné radialement autour de la poutre (254), et, d'autre part, une jupe (406) solidaire des sabots (404) et prolongeant le bord arrière (260) de la paroi extérieure (206b) du carter de soufflante (106), et
où en position avancée, la jupe (406) est en appui autour du cadre aval (252), et les sabots (404) sont à distance des poutres (254), où en position reculée, les sabots (404) sont en regard et à distance du cadre amont (250), et où en position intermédiaire entre la position avancée et la position reculée, les sabots (404) sont en regard et à distance des poutres (254).

2. Turboréacteur double flux (100) selon la revendication 1, **caractérisé en ce que** la distance 'dl' entre chaque sabot (404) et la poutre (254) correspondante est comprise entre 3 mm et 5 mm, et **en ce que** la distance 'd2' entre chaque sabot (404) et le cadre amont (250) est comprise entre 0 et 3 mm.

3. Turboréacteur double flux (100) selon l'une des revendications 1 ou 2, **caractérisé en ce que** le cadre aval (252) porte un joint (410) sur son pourtour extérieur, et **en ce que** la jupe (406) vient contre le joint (410) en position avancée.

4. Aéronef (10) comportant au moins un turboréacteur double flux (100) selon l'une des revendications précédentes.
